# EUROPEAN PATENT SPECIFICATION

(11) **EP 3 094 492 B1**
(45) Date of publication and mention of the grant of the patent: **15.05.2019**
(21) Application number: 15701485.3
(22) Date of filing: 12.01.2015
(51) Int. Cl.: B32B 15/08, A61J 1/10, B32B 15/085, B32B 15/088, B32B 15/09, B32B 15/20, B32B 1/02, B65D 65/00

(54) **LAMINATED BAG FOR PHARMACEUTICALS**
LAMINIERTER BEUTEL FÜR PHARMAZEUTIKA
POCHETTE STRATIFIÉE POUR PRODUITS PHARMACEUTIQUES

(30) Priority: 15.01.2014 IN 111DE2014
(43) Date of publication of application: 23.11.2016
(73) Proprietor: Centrient Pharmaceuticals Netherlands B.V., 2613 AX Delft (NL)
(72) Inventor: SRIDHARAN, Pranesh, NL-6100 AA Echt (NL); KUMAR, Arvind, NL-6100 AA Echt (NL)
(74) Representative: de Pauw, Elmar Sebastian David
(86) International application number: PCT/EP2015/050392
(87) International publication number: WO 2015/107016

(56) References cited:
- EP-A2- 0 201 880
- US-A1- 2006 222 792
- DATABASE WPI Week 201381 Thomson Scientific, London, GB; AN 2013-P06427 XP002737587, & CN 103 010 577 A (ZHANGJIAGANG BAISHENG PACKAGING MATERIALS CO LTD) 3 April 2013 (2013-04-03)

## Description

### Field of the invention

The present invention relates to a laminated bag containing an active pharmaceutical ingredient, a method for packaging an active pharmaceutical ingredient and the use of a laminated bag for packaging an active pharmaceutical ingredient.

### Background of the invention

Various laminated packaging materials have been developed which protect the packaged materials from moisture, light and air and in some cases maintain the moisture content of the contents of the package. US 1,538,277 describes a package for food and commodities from a laminated sheet. The sheet comprises an inner layer of metal foil, such as tin foil, attached with a layer of paraffin wax to a middle wax impregnated sheet of paper and an outer paper wrapper coated with a waxy material. Said package hermetically seals the contents of the package. US 2,400,390 describes a vacuum packaging sheet material formed by adhesively laminating aluminum or tin foil to a chlorinated rubber film. The edges of the chlorinated rubber film are heat sealed under vacuum to form a moisture, light and air resistant package. In US 3,560,223 a food product cooked in situ in a multilayer casing is described. The tubular casing is formed by laminating layers of thermoplastic film to both sides of a metal foil. The sealed tube formed therefrom is relatively impervious to moisture and oxygen transmission. US 4,096,309 describes a self-sealing packaging laminate of high strength and capacity. The laminate is composed of an outer sheet of non-woven spun-bonded polymeric filament such as polyethylene or polyester, a second layer of flexible metal foil, preferably aluminum, and an inner layer of heat sealable polyolefin. A face ply of smooth non-porous material such as Kraft paper is bonded to the outer spun-bonded polymeric filament layer. In US 4,364,989 a multilayer packaging material for snack food is described. The material comprises an outer layer of polypropylene, a low density polyethylene laminator and an inner layer which is a co-extrusion. The inner co-extruded layer comprises a first layer of high density polyethylene, a second layer of polypropylene and a third layer of ethylene methyl acrylate. The ethylene methyl acrylate surface is coated with an emulsion of polyvinylidene chloride, which seals the inner layers together upon application of heat. In US 2013/0213827 there is described a flexible container for storing food having a pad of liquid absorbing material disposed proximate the open end for absorbing liquid while the flexible container is evacuated prior to heat sealing the open end.

The laminated bags described above are designed for packaging foods and commodities. Innovative concepts for packaging pharmaceuticals are focused at formulated products such as tablets, such as for example the biodegradable films for blister packages as described in WO 2013/076734.

US2006/222792 A1 describes a storage system for stabilizing temozolomide which may comprise at least one sealed polymeric bag, (e.g., a transparent or opaque polyethylene bag) or a combination of such bags, which, if desired, may be sealed inside of a laminated aluminum bag.

EP0201880 A2 describes a composite container for sterile, solid products, comprising at least two separate bags, one inside the other with the inner bag directly containing the sterile solid product, having their respective ends hermetically sealed, wherein inner the bag is made of low-density polyethylene and the outer bag consists of three layers of different materials, polyethylene or polyvinylchloride forming an innermost layer, aluminum an intermediate layer and a polyester resin an outermost layer.

CN103010577 (A) discloses an anti-static moistureproof shielding bag for storing electronic equipment, such as integrated circuits and electromagnetic control systems, which is composed of an anti-static polyester layer, a pure metal aluminum foil layer, a reinforced nylon layer and an anti-static polyethylene layer in sequence from an outer layer to an inner layer.

Conventional packaging for bulk pharmaceutical use generally comprise a box-type non-flexible body. Active pharmaceutical ingredients (API) are stored and shipped in HDPE drums or corrugated boxes. One problem associated with such packaging is that these consume a significant amount of plastic and paper which have adverse impact on the environment, with millions of sea birds and mammals dying each year due to plastic ingestion or entanglement. Moreover, with increased consumption of plastic and paper it is becoming difficult to dispose of non-biodegradable waste. In addition, the prior art box-type non-flexible containers have another major disadvantage in that the amount of space occupied by the filled container is much higher than the space occupied by the pharmaceutical product itself. This is a problem in transport and storage where occupancy of minimal space is key. However, the conventional packaging containers such as boxes and drums are usually well-equipped to withstand external moisture from reaching the often sensitive pharmaceutical products and are also resilient to mechanical damage.

Hence, there is a need for innovative packaging which can significantly minimize the consumption of plastic and paper. The technical aim of the present invention is to produce a packaging structure for pharmaceutical use that overcomes the aforesaid technical problems, i.e. bringing flexible packaging economics whilst having sufficient resilience to penetration of moisture and mechanical damage.

### Detailed description of the invention

The present invention describes laminate bags filled with active pharmaceutical ingredients. Laminate bags are known for packaging of plastic granules. However, plastic granules are highly stable compounds requiring no particular temperature, moisture or other controls and precisely the contrary is required in the field of the present invention, namely bulk active pharmaceutical ingredients. We have found that bags comprising four layers of polyester, metal (such as tin or aluminum), nylon and polyethylene give protection to active pharmaceutical ingredient from external moisture during storing and transportation. Quality and stability surprisingly was found to be equal or even better when compared to existing packaging.

In the context of the present invention, the term "bag" refers to a non-rigid container. The term "laminated" refers to the result of lamination which is the technique of manufacturing a material in multiple layers, so that the composite material achieves improved strength, stability, sound insulation, appearance or other properties from the use of differing materials. A laminate is usually permanently assembled by heat, pressure, welding, or adhesives. The term "amoxicillin" refers to the compound (2S,5R,6R)-6-[[(2R)-amino(4-hydroxyphenyl)acetyl]amino]-3,3-dimethyl-7-oxo-4-thia-1-azabicyclo[3.2.0]heptane-2-carboxylic acid and is also meant to include salts and hydrates thereof, notably the sodium salt and the trihydrate. The term "ampicillin" refers to the compound (2*S*,5*R*,6*R*)-6-[[(2*R*)-aminophenylacetyl]amino]-3,3-dimethyl-7-oxo-4-thia-1-azabicyclo[3.2.0]heptane-2-carboxylic acid and is also meant to include salts and hydrates thereof, notably the sodium salt, the monohydrate, trihydrate and sesquihydrate. The term "atorvastatin" refers to the compound (β*R*,δ*R*)-2-(4-fluorophenyl)-β,δ-dihydroxy-5-(1-methylethyl)-3-phenyl-4-[(phenylamino)carbonyl]-1*H-*pyrrole-1-heptanoic acid and lactones, hydrates and salts thereof, notably the calcium salt, the calcium salt trihydrate, the lactone and the sodium salt. The term "cefaclor" refers to the compound (6*R*,7*R*)-7-[[(2*R*)-aminophenylacetyl]amino]-3-chloro-8-oxo-5-thia-1-azabicyclo[4.2.0]oct-2-ene-2-carboxylic acid and is also meant to include salts and hydrates thereof, notably the monohydrate. The term "cefadroxil" refers to the compound (6*R*,7*R*)-7-[[(2*R*)-amino-(4-hydroxyphenyl)acetyl]amino]-3-methyl-8-oxo-5-thia-1-azabicyclo[4.2.0]oct-2-ene-2-carboxylic acid and salts and hydrates thereof, notably the monohydrate. The term "cephalexin" refers to the compound (6*R*,7*R*)-7-[[(2*R*)-aminophenylacetyl]amino]-3-methyl-8-oxo-5-thia-1-azabicyclo[4.2.0]oct-2-ene-2-carboxylic acid and salts and hydrates thereof, notably the monohydrate, the monohydrochloride monohydrate and the sodium salt. The term "cephradine" refers to the compound (6*R*,7*R*)-7-[[(2*R*)-amino-1,4-cyclohexadien-1-ylacetyl]amino]-3-methyl-8-oxo-5-thia-1-azabicyclo[4.2.0]oct-2-ene-2-carboxylic acid and is also meant to include salts and hydrates thereof, notably the dihydrate and the monohydrate. The term "cloxacillin" refers to the compound (2S,5*R*,6*R*)-6-[[[3-(2-chlorophenyl)-5-methyl-4-isoxazolyl]carbonyl]amino]-3,3-dimethyl-7-oxo-4-thia-1-azabicyclo[3.2.0]heptane-2-carboxylic acid and salts and hydrates thereof, notably the benzathine salt, the sodium salt and the sodium salt monohydrate. The term "dicloxacillin" refers to the compound (2*S*,5*R*,6*R*)-6-[[[3-(2,6-dichlorophenyl)-5-methyl-4-isoxazolyl]carbonyl]amino]-3,3-dimethyl-7-oxo-4-thia-1-azabicyclo[3.2.0]heptane-2-carboxylic acid and salts and hydrates thereof, notably the sodium salt monohydrate. The term "flucloxacillin" refers to the compound (2*S*,5*R*,6*R*)-6-[[[3-(2-chloro-6-fluorophenyl)-5-methyl-4-isoxazolyl]carbonyl]-amino]-3,3-dimethyl-7-oxo-4-thia-1-azabicyclo[3.2.0]heptane-2-carboxylic acid and salts and hydrates thereof, notably the sodium salt monohydrate. The term "oxacillin" refers to the compound (2*S*,5*R*,6*R*)-3,3-dimethyl-6-[[(5-methyl-3-phenyl-4-isoxazolyl)carbonyl]-amino]-7-oxo-4-thia-1-azabicyclo[3.2.0]heptane-2-carboxylic acid and salts and hydrates thereof, notably the sodium salt monohydrate. The term "rosuvastatin" refers to the compound (3*R*,5*S*,6*E*)-7-[4-(4-fluorophenyl)-6-(1-methylethyl)-2-[methyl(methylsulfonyl)-amino]-5-pyrimidinyl]-3,5-dihydroxy-6-heptenoic acid and lactones, hydrates and salts thereof, notably the calcium salt.

In a first aspect, the present invention provides a laminated bag containing an active pharmaceutical ingredient characterized in that said laminated bag comprises an inner polyethylene layer completely embracing said active pharmaceutical ingredient and a metal layer completely embracing said inner polyethylene layer. The metal may be aluminum or tin.

In a first embodiment the laminated bag further comprises a layer of a aliphatic polyamide such as nylon like nylon-6,6; nylon-6; nylon-6,9; nylon-6,10; nylon-6,12; nylon-11; nylon-12 and nylon-4,6. Preferably said layer of aliphatic polyamide completely embraces the inner polyethylene layer. Most preferably the nylon layer is positioned between said polyethylene layer and said aluminum layer. In another preferred embodiment the laminated bag further comprises a layer of polyester completely embracing said inner polyethylene layer. Preferred examples of suitable polyesters are polybutylene succinate (PBS), polybutylene terephthalate (PBT), polycaprolactone (PCL), polyethylene adipate (PEA), polyethylene naphthalate (PEN), polyethylene terephthalate (PET), polyglycolic acid (PGA), polyhydroxyalkanoate (PHA), polyhydroxybutyrate (PHB), poly(3-hydroxybutyrate-co-3-hydroxyvalerate) (PHBV), polylactic acid (PLA) and polytrimethylene terephthalate (PTT). Most preferably the polyester is PET. In a most preferred embodiment the laminated bag comprises an inner polyethylene layer, a nylon layer completely embracing said inner polyethylene layer, an aluminum layer completely embracing said nylon layer and a polyester layer completely embracing said aluminum layer.

In a second embodiment the thickness of the layers is from 3 to 3000 µm, preferably from 5 to 2000 µm, more preferably from 10 to 1000 µm, most preferably from 12 to 750 µm. Preferably the thickness of the polyethylene layer is from 50 to 300 µm, more preferably from 100 to 200 µm. Preferably the thickness of the nylon layer is from 10 to 50 µm, more preferably from 12 to 25 µm. Preferably the thickness of the metal layer is from 300 to 1000 µm, more preferably from 500 to 750 µm. Preferably the thickness of the polyester layer is from 10 to 50 µm, more preferably from 10 to 25 µm.

In a third embodiment the layers of the laminated bag comprise an adhesive in between two layers. Suitable adhesives are those known to the skilled person such as, for example, double component polyurethane adhesives.

In a fourth embodiment of the invention, a one way valve is connected to the laminated bag. One way valves are used to create a unidirectional flow in a device such as the laminated bag of the present invention. A one way valve may be an elastomeric sealing element that allows forward flow and prevent backward flow of gases. In the laminated bag of the present invention the one way valve is connected such that gas can flow from the inside of the laminated bag to the outside. There are various designs available that are suitable for application in the present invention. In case a low opening pressure and ease of assembly is required a preferred one way valve is a duckbill valve. In case a certain cracking pressure or a low-pressure drop at higher flows is needed, an umbrella valve is preferred. The skilled person is aware of the existing and function of the various types of one way valves that are applicable in the present invention such as Belleville valves, cross-slit valves, dome valves, duckbill valves, mini valve balls and umbrella valves. The valves mentioned above are commercially available and can be made from various materials, usually but not necessarily polymers. Assembly of the valves mentioned above to the laminated bag of the present invention can be done according to procedures known to the skilled person.

In a fifth embodiment of the invention the active pharmaceutical ingredient is an antibiotic chosen from the list consisting of amoxicillin, ampicillin, cefaclor, cefadroxil, cefprozil, cephalexin, cephradine, cloxacillin, dicloxacillin, flucloxacillin and oxacillin or a statin chosen from the list consisting of atorvastatin, lovastatin, nystatin, pitavastatin, pravastatin, rosuvastatin and simvastatin. Preferably the antibiotic is amoxicillin, most preferably in the form of amoxicillin trihydrate.

In a sixth embodiment the active pharmaceutical ingredient is packaged in one or two separate bags prior to packaging in the laminated bag of the present invention. Preferably the active pharmaceutical ingredient is packaged in a polyethylene bag. More preferably the resulting active pharmaceutical ingredient packaged in a polyethylene bag is packaged in a second bag. Said second bag may be polyethylene or metal film, depending on specific needs as usually dictated by customers. Suitable metal films are aluminum and tin, preferably aluminum.

In a second aspect, the present invention provides a method for packaging an active pharmaceutical ingredient comprising bringing said active pharmaceutical ingredient into a laminated bag as described in the first aspect of the invention. Insertion of the active pharmaceutical ingredient may be done using automated bag-filling equipment as known to the skilled person.

In a third aspect, the present invention provides the use of a laminated bag as described in the first aspect of the invention for packaging active pharmaceutical ingredients such as amoxicillin, ampicillin, atorvastatin, cefaclor, cefadroxil, cefprozil, cephalexin, cephradine, cloxacillin, dicloxacillin, flucloxacillin, lovastatin, nystatin, oxacillin, pitavastatin, pravastatin, rosuvastatin and simvastatin.

Use of the laminated bags of the present invention by a large antibiotic production facility is estimated to result in an annual reduction of 1,500 mt CO₂ by reducing the use of close to 400 mt of plastic and paper. Further estimated advantages for a large antibiotics production facility are conservation of nonrenewable fossil fuels (and thus electricity), over 500,000 I crude oil savings (1.75 I crude oil produces 1 kg HDPE), or 24,000 GJ in energy savings (1 I crude oil is needed for ∼100 MJ.kg⁻¹ plastic). In addition the reduction in required storage and transportation space amounts up to 80% (leading to energy savings for electricity consumption and cooling processes in warehouses and fuel for transports).

### Legend to the Figures

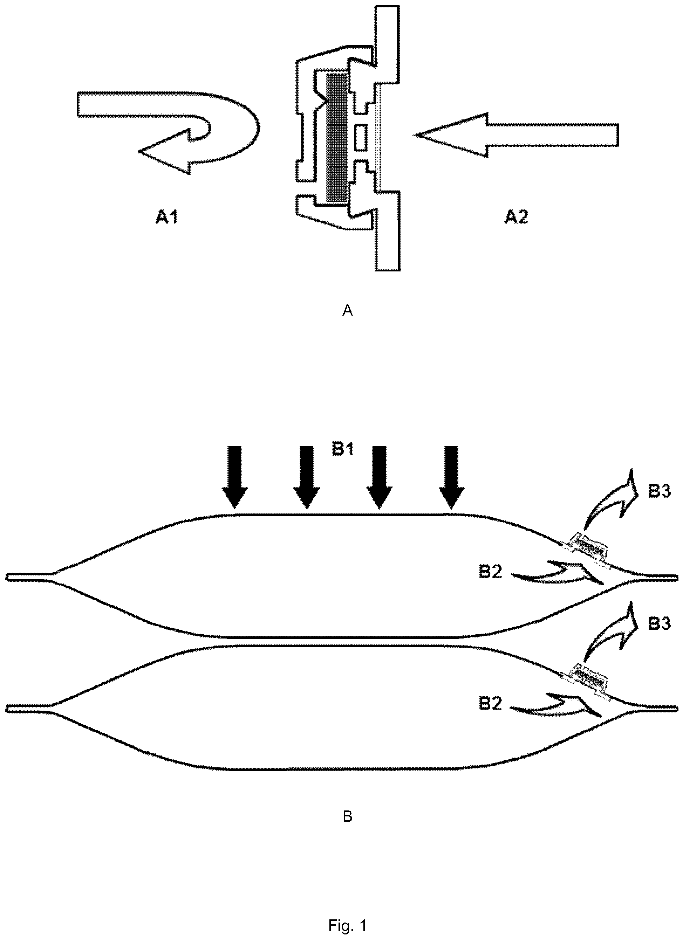

Figure 1 a schematic representation of a one way valve (top, A): A1 represents the exterior wherein gas flow cannot pass the one way valve and A2 represent the interior from where the gas flow can pass the one way vale. The positioning in the laminated bag of the present invention and the functioning of the one way valve is depicted thereof in B (bottom). Upon application of pressure (B1) on the laminated bag, gas flows from the interior (B2) to the exterior (B3). Upon release of pressure there is no return gas flow.

### EXAMPLES

### Example 1

### Properties of laminated bag

Physical properties of a laminated bag comprising an inner polyethylene (linear low-density polyethylene, LLDPE) layer having a thickness of 135 µm, followed by a nylon (oriented polyamide, OPA) layer having a thickness of 15 µm, followed by an aluminum layer having a thickness of 635 µm and finally a polyester (PET) layer having a thickness of 12 µm were determined. Adhesive was present in between two layers: 3 µm of adhesive between polyethylene and nylon, 3 µm of adhesive between nylon and aluminum and 4 µm of adhesive between aluminum and polyester.

**Weight per surface unit:**

| | |
|---|---|
| • Inner polyethylene layer: | 120 g.m⁻² |
| • Adhesive layer between polyethylene and nylon: | 3 g.m⁻² |
| • Nylon (oriented polyamide, OPA) layer: | 17 g.m⁻² |
| • Adhesive layer between nylon and aluminum: | 3 g.m⁻² |
| • Aluminum layer: | 17 g.m⁻² |
| • Adhesive layer between aluminum and polyester: | 4 g.m⁻² |
| • Polyester layer: | 17 g.m⁻² |
| • Total of laminated bag: | 183 g.m⁻² |

**Tensile strength:**

| | |
|---|---|
| • Tensile strength MD: | 83 N.15 mm⁻¹ |
| • Tensile strength TD: | 125 N.15 mm⁻¹ |
| • Elongation MD: | 66% |
| • Elongation TD: | 102% |

**Puncture resistance:**

| Out/in: | |
|---|---|
| • Max force: | 49 N |
| • Deformation: | 0.72 cm |
| • Max energy: | 14.0 N.cm |

| In/out: | |
|---|---|
| • Max force: | 60 N |
| • Deformation: | 0.79 cm |
| • Max energy: | 20.0 N.cm |

**Seal strength (P: 230 kPa, t: 1.5 s):**

| | |
|---|---|
| • Seal strength: | 94 N.15 mm⁻¹ |
| • Temperature: | 200°C |

**Barrier properties:**

| | |
|---|---|
| • Oxygen permeability (23°C and 0% rel. humidity): | < 0.1 cc.m⁻²/24 h |
| • Moisture permeability (38°C and 90% rel. humidity): | < 0.1 g.m⁻²//24 h |

**Slipperiness:**

| | |
|---|---|
| • COF static: | > 0.6 |
| • COF dynamic: | > 0.5 |

**Tearing resistance:**

| | |
|---|---|
| • MD: | > 10,000 mN |
| • TD: | > 15,000 mN |

### Example 2

### Stability of amoxicillin trihydrate packaged in laminated bag

Batches of amoxicillin trihydrate were stored for 6 months at 40±2°C and a relative humidity (RH) of 75±5%. Samples were analyzed after 0, 1, 2, 3 and 6 months. Batches A1 and A2 represent existing packaging (25 kg batches of amoxicillin in a primary bag of polyethylene, a secondary bag of aluminum or polyethylene and a tertiary bag which is a corrugated box or HDPE drum) and batches B1 and B2 represent packaging according to the present invention (25 kg batches of amoxicillin in a primary bag of polyethylene, a secondary bag of polyethylene and a tertiary bag which is a laminated bag as described in Example 1). The laminate bag was further equipped with a one way valve. Storage and analysis was according to ICH and EU Guidelines on stability studies. Specification of amoxicillin trihydrate are as follows:

| | |
|---|---|
| Assay: | 95-102% |
| Water: | 11.5-14.5% |
| Appearance of solution: | To conform |
| pH: | 3.5-5.5 |
| Specific rotation: | +290 to 315° |
| Related substances: | Individual known impurities (NMT 1.0%) |

Stability data of the four tested batches are as follows:

**Table 1 Stability data of batches A1 and A2 (25 kg batches of amoxicillin trihydrate packaged in a primary bag of polyethylene, a secondary bag of aluminum or polyethylene and a tertiary bag which is a corrugated box or HDPE drum).**

| Time (months) | HPLC Assay (%) | | Water (%) | | pH | | Specific optical rotation (°) | |
|---|---|---|---|---|---|---|---|---|
| | A1 | A2 | A1 | A2 | A1 | A2 | A1 | A2 |
| 0 | 99.4 | 99.4 | 13.1 | 13.1 | 4.8 | 4.9 | 304 | 304 |
| 1 | 98.7 | 98.8 | 13.0 | 13.0 | 4.8 | 4.8 | 301 | 301 |
| 2 | 98.6 | 98.7 | 13.1 | 13.1 | 4.8 | 4.8 | 299 | 300 |
| 3 | 98.4 | 98.4 | 13.1 | 13.1 | 4.9 | 4.9 | 298 | 298 |
| 6 | 98.3 | 98.4 | 13.4 | 13.3 | 4.9 | 4.9 | 298 | 298 |

**Table 2 Stability data of batches B1 and B2 (25 kg batches of amoxicillin trihydrate packaged in a primary bag of polyethylene, a secondary bag of polyethylene and a tertiary bag which is a laminated bag as described in Example 1).**

| Time (months) | HPLC Assay (%) | | Water pH (%) | | | | Specific optical rotation (°) | |
|---|---|---|---|---|---|---|---|---|
| | B1 | B2 | B1 | B2 | B1 | B2 | B1 | B2 |
| 0 | 99.8 | 99.7 | 13.1 | 13.1 | 5.0 | 5.0 | 304 | 304 |
| 1 | 99.5 | 99.5 | 13.0 | 13.0 | 5.0 | 5.0 | 303 | 304 |
| 2 | 99.4 | 99.4 | 13.2 | 13.0 | 5.0 | 5.0 | 303 | 303 |
| 3 | 99.3 | 99.3 | 13.0 | 13.1 | 5.0 | 4.9 | 303 | 303 |
| 6 | 99.1 | 99.1 | 13.1 | 13.0 | 4.9 | 4.9 | 302 | 303 |

Upon comparing the results as depicted in Tables 1 and 2 it became clear that packaging amoxicillin trihydrate in the laminated bags according to the present invention lead to equal or improved stability results as was the case when amoxicillin trihydrate was packaged and stored in a traditional fashion.

## Claims

1. A laminated bag containing an active pharmaceutical ingredient **characterized in that** said laminated bag comprises an inner polyethylene layer completely embracing said active pharmaceutical ingredient, an aluminum layer completely embracing said inner polyethylene layer, and a nylon layer completely embracing said inner polyethylene layer, wherein said nylon layer is positioned between said polyethylene layer and said aluminum layer.

2. Laminated bag according to claim 1 comprising an inner polyethylene layer, a nylon layer completely embracing said inner polyethylene layer, an aluminum layer completely embracing said nylon layer and a polyester layer completely embracing said aluminum layer.

3. Laminated bag according to any one of claims 1 to 2 wherein the thickness of said layers is from 10 to 1000 µm.

4. Laminated bag according to any one of claims 2 to 3 wherein the thickness of said polyethylene layer is from 50 to 300 µm, the thickness of said nylon layer is from 10 to 50 µm, the thickness of said aluminum layer is from 300 to 1000 µm and the thickness of said polyester layer is from 10 to 50 µm.

5. Laminated bag according to any one of claims 1 to 4 wherein an adhesive is present between two layers.

6. Laminated bag according to any one of claims 1 to 5 further comprising a one way valve positioned such that gas can pass from the interior of said laminated bag to the exterior.

7. Laminated bag according to any one of claims 1 to 6 wherein said active pharmaceutical ingredient is an antibiotic chosen from the list consisting of amoxicillin, ampicillin, cefaclor, cefadroxil, cefprozil, cephalexin, cephradine, cloxacillin, dicloxacillin, flucloxacillin and oxacillin or a statin chosen from the list consisting of atorvastatin, lovastatin, nystatin, pitavastatin, pravastatin, rosuvastatin and simvastatin.

8. Laminated bag according to claim 7 wherein said active pharmaceutical ingredient is amoxicillin trihydrate.

9. Laminated bag according to any one of claims 1 to 8 wherein said active pharmaceutical ingredient is packaged in a polyethylene bag.

10. Laminated bag according to claim 9 wherein said active pharmaceutical ingredient packaged in a polyethylene bag is packaged in a second bag which is polyethylene or aluminum.

11. Method for packaging an active pharmaceutical ingredient comprising bringing said active pharmaceutical ingredient into a laminated bag comprising an inner polyethylene layer, an aluminum layer completely embracing said inner polyethylene layer, and a nylon layer completely embracing said inner polyethylene layer, wherein said nylon layer is positioned between said polyethylene layer and said aluminum layer.

12. Use of a laminated bag comprising an inner polyethylene layer, an aluminum layer completely embracing said inner polyethylene layer, and a nylon layer completely embracing said inner polyethylene layer, wherein said nylon layer is positioned between said polyethylene layer and said aluminum layer, for packaging active pharmaceutical ingredients.

13. Use according to claim 12 wherein said laminated bag further comprises a polyester layer completely embracing said inner polyethylene layer, wherein said polyester layer completely embraces said aluminum layer.

## Patentansprüche

1. Laminierter Beutel, der einen pharmazeutischen Wirkstoff enthält, **dadurch gekennzeichnet, dass** der laminierte Beutel eine innere Polyethylenschicht, die den pharmazeutischen Wirkstoff vollständig umschließt, eine Aluminiumschicht, die die innere Polyethylenschicht vollständig umschließt, und eine Nylonschicht, die die innere Polyethylenschicht vollständig umschließt, umfasst, wobei sich die Nylonschicht zwischen der Polyethylenschicht und der Aluminiumschicht befindet.

2. Laminierter Beutel nach Anspruch 1, umfassend eine innere Polyethylenschicht, eine Nylonschicht, die die innere Polyethylenschicht vollständig umschließt, eine Aluminiumschicht, die die Nylonschicht vollständig umschließt, und eine Polyesterschicht, die die Aluminiumschicht vollständig umschließt.

3. Laminierter Beutel nach einem der Ansprüche 1 bis 2, wobei die Dicke der Schichten 10 bis 1000 µm beträgt.

4. Laminierter Beutel nach einem der Ansprüche 2 bis 3, wobei die Dicke der Polyethylenschicht 50 bis 300 µm beträgt, die Dicke der Nylonschicht 10 bis 50 µm beträgt, die Dicke der Aluminiumschicht 300 bis 1000 µm beträgt und die Dicke der Polyesterschicht 10 bis 50 µm beträgt.

5. Laminierter Beutel nach einem der Ansprüche 1 bis 4, wobei zwischen zwei Schichten ein Klebstoff vorhanden ist.

6. Laminierter Beutel nach einem der Ansprüche 1 bis 5, weiterhin umfassend ein Zwei-Wege-Ventil, das so positioniert ist, dass Gas vom Inneren des laminierten Beutels nach außen gelangen kann.

7. Laminierter Beutel nach einem der Ansprüche 1 bis 6, wobei es sich bei dem pharmazeutischen Wirkstoff um ein aus der aus Amoxicillin, Ampicillin, Cefaclor, Cefadroxil, Cefprozil, Cephalexin, Cephradin, Cloxacillin, Dicloxacillin, Flucloxacillin und Oxacillin bestehenden Liste ausgewähltes Antibiotikum oder aus der aus Atorvastatin, Lovastatin, Nystatin, Pitavastatin, Pravastatin, Rosuvstatin und Simvastatin bestehenden Liste ausgewähltes Statin handelt.

8. Laminierter Beutel nach Anspruch 7, wobei es sich bei dem pharmazeutischen Wirkstoff um Amoxicillintrihydrat handelt.

9. Laminierter Beutel nach einem der Ansprüche 1 bis 8, wobei der pharmazeutische Wirkstoff in einem Polyethylenbeutel verpackt ist.

10. Laminierter Beutel nach Anspruch 9, wobei der in einem Polyethylenbeutel verpackte pharmazeutische Wirkstoff in einem zweiten Beutel aus Polyethylen oder Aluminium verpacket ist.

11. Verfahren zum Verpacken eines pharmazeutischen Wirkstoffs, bei dem man den pharmazeutischen Wirkstoff in einen laminierten Beutel einbringt, der eine innere Polyethylenschicht, eine Aluminiumschicht, die die innere Polyethylenschicht vollständig umschließt, und eine Nylonschicht, die die innere Polyethylenschicht vollständig umschließt, einbringt, wobei sich die Nylonschicht zwischen der Polyethylenschicht und der Aluminiumschicht befindet.

12. Verwendung eines laminierten Beutels, der eine innere Polyethylenschicht, eine Aluminiumschicht, die die innere Polyethylenschicht vollständig umschließt, und einen Nylonschicht, die die innere Polyethylenschicht vollständig umschließt, umfasst, wobei sich die Nylonschicht zwischen der Polyethylenschicht und der Aluminiumschicht befindet, zum Verpacken pharmazeutischer Wirkstoffe.

13. Verwendung nach Anspruch 12, wobei der laminierte Beutel weiterhin eine Polyesterschicht, die die innere Polyethylenschicht vollständig umschließt, umfasst, wobei die Polyesterschicht die Aluminiumschicht vollständig umschließt.

## Revendications

1. Poche stratifiée contenant un principe pharmaceutique actif **caractérisée en ce que** ladite poche stratifiée comprend une couche de polyéthylène intérieure englobant complètement ledit principe pharmaceutique actif, une couche d'aluminium englobant complètement ladite couche de polyéthylène intérieure et une couche de nylon englobant complètement ladite couche de polyéthylène intérieure, dans laquelle ladite couche de nylon est disposée entre ladite couche de polyéthylène et ladite couche d'aluminium.

2. Poche stratifiée selon la revendication 1 comprenant une couche de polyéthylène intérieure, une couche de nylon englobant complètement ladite couche de polyéthylène intérieure, une couche d'aluminium englobant complètement ladite couche de nylon et une couche de polyester englobant complètement ladite couche d'aluminium.

3. Poche stratifiée selon l'une quelconque des revendications 1 à 2 dans laquelle l'épaisseur desdites couches est de 10 à 1000 µm.

4. Poche stratifiée selon l'une quelconque des revendications 2 à 3 dans laquelle l'épaisseur de ladite couche de polyéthylène est de 50 à 300 µm, l'épaisseur de ladite couche de nylon est de 10 à 50 µm, l'épaisseur de ladite couche d'aluminium est de 300 à 1000 µm et l'épaisseur de ladite couche de polyester est de 10 à 50 µm.

5. Poche stratifiée selon l'une quelconque des revendications 1 à 4 dans laquelle un adhésif est présent entre deux couches.

6. Poche stratifiée selon l'une quelconque des revendications 1 à 5 comprenant en outre une valve antiretour disposée de façon telle que du gaz peut passer de l'intérieur de ladite poche stratifiée vers l'extérieur.

7. Poche stratifiée selon l'une quelconque des revendications 1 à 6 dans laquelle ledit principe pharmaceutique actif est un antibiotique choisi dans la liste constituée par l'amoxicilline, l'ampicilline, le céfaclor, le céfadroxil, le cefprozil, la céphalexine, la céfradine, la cloxacilline, la dicloxacilline, la flucloxacilline et l'oxacilline ou une statine choisie dans la liste constituée par l'atorvastatine, la lovastatine, la nystatine, la pitavastatine, la pravastatine, la rosuvastatine et la simvastatine.

8. Poche stratifiée selon la revendication 7 dans laquelle ledit principe pharmaceutique actif est l'amoxicilline trihydratée.

9. Poche stratifiée selon l'une quelconque des revendications 1 à 8 dans laquelle ledit principe pharmaceutique actif est conditionné dans une poche en polyéthylène.

10. Poche stratifiée selon la revendication 9 dans laquelle ledit principe pharmaceutique actif conditionné dans une poche en polyéthylène est conditionné dans une seconde poche qui est du polyéthylène ou de l'aluminium.

11. Procédé pour le conditionnement d'un principe pharmaceutique actif comprenant l'introduction dudit principe pharmaceutique actif dans une poche stratifiée comprenant une couche de polyéthylène intérieure, une couche d'aluminium englobant complètement ladite couche de polyéthylène intérieure et une couche de nylon englobant complètement ladite couche de polyéthylène intérieure, dans lequel ladite couche de nylon est disposée entre ladite couche de polyéthylène et ladite couche d'aluminium.

12. Utilisation d'une poche stratifiée comprenant une couche de polyéthylène intérieure, une couche d'aluminium englobant complètement ladite couche de polyéthylène intérieure et une couche de nylon englobant complètement ladite couche de polyéthylène intérieure, ladite couche de nylon étant disposée entre ladite couche de polyéthylène et ladite couche d'aluminium, pour le conditionnement de principes pharmaceutiques actifs.

13. Utilisation selon la revendication 12 dans laquelle ladite poche stratifiée comprend en outre une couche de polyester englobant complètement ladite couche de polyéthylène intérieure, ladite couche de polyester englobant complètement ladite couche d'aluminium.
